# EUROPEAN PATENT APPLICATION

(11) **EP 2 752 438 A2**
(43) Date of publication of application: **09.07.2014**
(21) Application number: 12828683.8
(22) Date of filing: 31.07.2012
(51) Int. Cl.: C08G 63/16, C08G 63/78, C08L 67/02, C08L 101/16

(54) **PRODUCTION METHOD FOR A BIODEGRADABLE POLYESTER COPOLYMER RESIN**

(30) Priority: 02.09.2011 KR 20110089132
(71) Applicant: Samsung Fine Chemicals Co., Ltd., Ulsan-city 680-090 (KR)
(72) Inventor: KANG, Gyung Don, Daejeon 305-768 (KR); YUN, Ki Chull, Cheonan-Si Chungcheongnam-Do 330-260 (KR); CHUN, Jong Pil, Daejeon 305-728 (KR); PARK, Sung Bae, Incheon 407-788 (KR)
(74) Representative: Kador & Partner
(86) International application number: PCT/KR2012/006093
(87) International publication number: WO 2013/032140

(57) **Abstract**

There is provided a production method for a biodegradable resin using a relatively inexpensive compound as an aromatic dicarboxylic acid compound, wherein, during the process of producing a biodegradable resin in the form of an aliphatic-aromatic polyester copolymer, an aliphatic dihydroxyl compound used as a starting material is used in an amount of between 1 and 1.5 equivalent weight with respect to aliphatic and aromatic dicarboxylic acid compounds. The present invention includes the steps of: causing a hydroxyl group of the aliphatic dihydroxyl compound to undergo a first reaction with a carboxyl group of the aliphatic dicarboxylic acid compound; and causing the residual hydroxyl group of the aliphatic dihydroxyl compound to undergo a second reaction with a carboxyl group of the aromatic dicarboxylic acid compound. The present invention has the advantage that it is possible to produce the aliphatic-aromatic polyester copolymer biodegradable resin by means of an efficient method while not detracting from the mechanical properties of the biodegradable resin.

## Description

### CROSS-REFERENCE TO RELATED APPLICATION

This application claims priority to and the benefit of Korean Patent Application No. 2011-0089132, filed on September 2, 2011, the disclosure of which is incorporated herein by reference in its entirety.

### BACKGROUND

### 1. Field of the Invention

The present invention relates to a production method for an aliphatic-aromatic polyester copolymer improved in mechanical properties and a biodegradable resin including the same.

### 2. Discussion of Related Art

Biodegradable resins are synthetic resins developed as new materials which do not bring about the problem of environmental contamination by being degraded into water and carbon dioxide or water and a methane gas by means of microorganisms in the nature, for example, bacteria, algae, and molds.

The biodegradable resins widely used together with cellulose-based polymers and starches are produced from aliphatic polyesters such as polylactic acid (PLA), polybutylene succinate (PBS), polyethylene succinate (PES), polycaprolactone (PCL), etc.

These aliphatic polyester resins have excellent biodegradability but poor mechanical properties. Therefore, there has been developed a method in which in order to complement a mechanical strength of an aliphatic polyester resin, an aromatic monomer is added to be synthesized in a production process of a biodegradable resin, thereby producing a biodegradable resin in the form of an aliphatic-aromatic copolymer.

As the aromatic monomer, dimethyl terephthalate (DMT) is typically used. The dimethyl terephthalate is reactive at a reaction temperature of 190°C or less. Therefore, a reaction can be easily induced. However, since it is expensive, there has been a big burden in terms of manufacturing costs.

Thus, there are continuous trials for producing a copolymer using an aromatic monomer cheaper than the dimethyl terephthalate. For example, there is suggested a method of using terephthalic acid (TPA) in a synthesizing reaction of a copolymer. However, such a terephthalic acid has no melting point and sublimates at a high temperature unlike the dimethyl terephthalate. Further, since the terephthalic acid is dissolved in 1,4-butanediol (BDO) used as a representative monomer in a production method for a biodegradable polyester resin at a temperature of 230°C or more under normal pressure, a reaction temperature of 230°C or more is needed to induce a uniform reaction between the terephthalic acid and the 1,4-butanediol. However, the 1,4-butanediol is converted into tetrahydrofuran (THF) and consumed when reaching a temperature of 190°C under acid condition, and thus it needs to be used in an excessive amount considering an amount of 1,4-butanediol consumed as tetrahydrofuran during a production process for a copolymer with an aromatic monomer, such as the terephthalic acid requiring a high reaction temperature.

### SUMMARY OF THE INVENTION

The present invention is directed to a production method for a polyester copolymer and a biodegradable resin including the same using a relatively cheap compound as an aromatic dicarboxylic acid compound without using an excessive amount of an aliphatic dihydroxyl compound as a starting material with respect to aliphatic and aromatic dicarboxylic acid compounds in producing a biodegradable resin in the form of an aliphatic-aromatic copolymer with the aliphatic dihydroxyl compound and the aliphatic and aromatic dicarboxylic acid compounds.

In addition, the present invention is directed to a production method by means of an efficient production process for producing a biodegradable resin in the form of an aliphatic-aromatic copolymer which can maintain mechanical properties without deterioration.

According to an aspect of the present invention, there is provided a production method for a biodegradable polyester copolymer resin including: causing a hydroxyl group of an aliphatic dihydroxyl compound to undergo a first reaction with a carboxyl group of an aliphatic dicarboxylic acid compound; and causing the residual hydroxyl group of the aliphatic dihydroxyl compound to undergo a second reaction with a carboxyl group of an aromatic dicarboxylic acid compound.-Preferably, the aliphatic dihydroxyl compound may be 1,4-butanediol (BDO).

Preferably, the aliphatic dicarboxylic acid compound may be a compound expressed by Chemical Formula 1, anhydrides, or derivatives thereof.

[Chemical Formula 1] HOOC-(CH₂)ₙ-COOH

In Chemical Formula 1, n may be 2 to 12.

Preferably, the aromatic dicarboxylic acid compound may be one or more selected from the group consisting of phthalic acid (PA), phthalic anhydride, isophthalic acid (IPA), terephthalic acid (TPA), and naphthalene-2,6-dicarboxylic acid.

Preferably, the aliphatic dihydroxyl compound may be used in an amount of 1 to 1.5 equivalent weight with respect to the aliphatic and aromatic dicarboxylic acid compounds.

Preferably, the first reaction may be carried out first at a temperature ranging from 170°C to 190°C and the second reaction may be carried out in sequence at a temperature ranging from 230°C to 260°C.

Preferably, the aliphatic dihydroxyl compound, the aliphatic dicarboxylic acid compound, and the aromatic dicarboxylic acid compound may be put into a reactor at the same time and a reaction temperature may be set to 170°C to 190°C to carry out the first reaction, and then the reaction temperature may be set to 230°C to 260°C to carry out the second reaction.

Preferably, the aliphatic dihydroxyl compound and the aliphatic dicarboxylic acid compound may be put into a reactor and a reaction temperature may be set to 170°C to 190°C to carry out the first reaction, and then the aromatic dicarboxylic acid compound may be put into the reactor and the reaction temperature may be set to 230°C to 260°C to carry out the second reaction.

Preferably, the present invention further includes causing an aliphatic-aromatic polyester copolymer obtained from the first and second reactions to undergo a polycondensation reaction at 220°C to 250°C and at a vacuum level of less than 2 torr for 40 to 300 minutes.

Preferably, the present invention further includes making a chain extension reaction by adding a chain extender after the polycondensation reaction.

Preferably, in the above-described reaction, a branching agent, a catalyst, or a thermal stabilizer may be used.

According to the present invention, in producing a biodegradable resin in the form of a copolymer from an aliphatic dihydroxyl compound and aliphatic and aromatic dicarboxylic acid compounds, the aliphatic dihydroxyl compound can be efficiently used in a reaction without waste. Further, a relatively cheap compound can be used as the aromatic dicarboxylic acid compound.

Meanwhile, the biodegradable resin produced according to the present invention maintains mechanical properties and thermal characteristics of a conventional biodegradable resin in the form of an aliphatic-aromatic polyester copolymer.

Therefore, according to the present invention, it is possible to produce a biodegradable polyester resin having desirable mechanical properties by an economical and efficient method.

### DETAILED DESCRIPTION OF EXEMPLARY EMBODIMENTS

The present invention relates to a production method for a biodegradable resin in the form of an aliphatic-aromatic polyester copolymer using an aromatic monomer in order to enhance mechanical properties of the biodegradable resin composed of an aliphatic polyester polymer. The copolymer is aliphatic-aromatic polyester obtained from a reaction among an aliphatic dihydroxyl compound and aliphatic and aromatic dicarboxylic acid compounds.

In the present invention, as the aromatic carboxylic acid compound, phthalic acid (PA), phthalic anhydride, isophthalic acid (IPA), terephthalic acid (TPA), or naphthalene-2,6-dicarboxylic acid is used. For example, terephthalic acid (TPA) has an advantage of being cheaper than dimethyl terephthalate (DMT) typically used as an aromatic monomer, but unlike the dimethyl terephthalate which is reactive at a temperature of 190°C or less, the terephthalic acid can make a uniform esterification reaction with the aliphatic dihydroxyl compound at a temperature of 220°C or more.

However, 1,4-butanediol (BDO) used as the aliphatic dihydroxyl compound in an example of the present invention is converted into tetrahydrofuran (THF) and consumed at a temperature of 190°C or more. Therefore, if the terephthalic acid is used as an aromatic monomer, the aliphatic dihydroxyl compound needs to be used in an amount of 2.5 to 3 equivalent weight with respect to the total weight of the dicarboxylic acid.

In the present invention, in order to prevent an excessive consumption of the aliphatic dihydroxyl compound, the aliphatic dihydroxyl compound is fixed by making a reaction first with an aliphatic dicarboxylic acid compound which is reactive at a relatively low temperature.

To be more specific, in the present invention, an aliphatic-aromatic polyester copolymer is produced by causing a hydroxyl group of an aliphatic dihydroxyl compound to undergo a first reaction with a carboxyl group of an aliphatic dicarboxylic acid compound; and causing the residual hydroxyl group of the aliphatic dihydroxyl compound to undergo a second reaction with a carboxyl group of an aromatic dicarboxylic acid compound.

The aliphatic dicarboxylic acid compound reacting with the aliphatic dihydroxyl compound can be employed from any aliphatic dicarboxylic acid compound as long as it can form an oligomer with an aliphatic dihydroxyl compound through a low-temperature reaction and can be fixed so as not to be used up in a subsequent high-temperature reaction. In an example of the present invention, as the aliphatic dicarboxylic acid compound, a compound expressed by Chemical Formula 1, anhydrides, or derivatives thereof may be used.

[Chemical Formula 1] HOOC-(CH₂)ₙ-COOH

In Chemical Formula 1, n may be 2 to 12.

Preferably, the n may be 2 to 8. As a specific example of the aliphatic dicarboxylic acid compound, succinic acid (SA), glutaric acid (GA), adipic acid (AA), or anhydrides or derivatives thereof may be used.

Two carboxylic acids contained in the aliphatic dicarboxylic acid compound make an esterification reaction with a hydroxyl group contained in the aliphatic dihydroxyl compound. In this case, the aliphatic dicarboxylic acid compound is used in an amount of less than 0.5 equivalent weight with respect to the aliphatic dihydroxyl compound. That is, two aliphatic dihydroxyl compounds are bonded and fixed to one aliphatic dicarboxylic acid compound.

To be specific, the 1,4-butanediol used as the aliphatic dihydroxyl compound in an example of the present invention reacts with adipic acid to form an oligomer in the form of BDO-AA-BDO. The 1,4-butanediol that forms such an oligomer is neither converted into tetrahydrofuran nor consumed even if a temperature is increased and an additional reaction is carried out at a high temperature.

In the present invention, the aliphatic dihydroxyl compound is not limited to 1,4-butanediol, and any aliphatic dihydroxyl compound can be used without limitation as long as it can be used as a starting material in producing an aliphatic-aromatic polyester biodegradable resin. In particular, an aliphatic dihydroxyl compound which is highly likely to be consumed in a high-temperature reaction can be used advantageously.

The reaction between the aliphatic dihydroxyl compound and the aliphatic dicarboxylic acid compound is ended when water flowing out during the esterification reaction reaches a theoretically calculated outflow (i.e. an amount of water corresponding to the total molar amount of the carboxylic acid contained in the aliphatic dicarboxylic acid compound).

When the first reaction of the aliphatic dihydroxyl compound with the aliphatic dicarboxylic acid compound is completed at a low temperature, the second reaction with the aromatic dicarboxylic acid compound is carried out. The second reaction is carried out at a higher temperature than the temperature of the first reaction. To be specific, if terephthalic acid (TPA) is used as the aromatic dicarboxylic acid compound, the esterification reaction is uniformly carried out at a temperature of 220°C or more. Therefore, preferably, a temperature of the second reaction may be in a range of 220 to 260°C.

Although phthalic acid (PA), phthalic anhydride, isophthalic acid (IPA), terephthalic acid (TPA), or naphthalene-2,6-dicarboxylic acid is used as the aromatic dicarboxylic acid compound in the present invention, the aromatic dicarboxylic acid compound is not limited thereto. Any aromatic dicarboxylic acid compound can be used advantageously as long as it is an aromatic monomer used for improving mechanical properties of a biodegradable resin composed of an aliphatic polyester homopolymer and can induce an esterification reaction with an aliphatic dihydroxyl compound particularly at a high temperature.

In the present invention, during the esterification reaction between the aliphatic dihydroxyl compound and the aliphatic and aromatic dicarboxylic acid compound, the aliphatic dihydroxyl compound may be used in an amount of 1 to 2 equivalent weight, and preferably 1 to 1.5 equivalent weight with respect to the total weight of the dicarboxylic acid compounds. During the first reaction, the dihydroxyl compound is used in an excessive amount with respect to the aliphatic dicarboxylic acid compound so as to form an oligomer in which the aliphatic dihydroxyl compound is condensed and fixed at both ends of the aliphatic dicarboxylic acid, and then, during the second reaction, the residual hydroxyl groups at the both ends make a dehydrating condensation reaction with the carboxylic acid group of the aromatic dicarboxylic acid so as to form an aliphatic-aromatic polyester copolymer.

The above-described production method of the present invention can remarkably reduce an amount of an aliphatic dihydroxyl compound used as compared with a conventional method in which an aliphatic dihydroxyl compound is used in an excessive amount of 2.5 equivalent weight or more with respect to dicarboxylic acid compounds.

The present invention is advantageous particularly for cases corresponding to the second reaction, i.e. a case where a reaction between the aliphatic dihydroxyl compound and the aromatic dicarboxylic acid compound is induced at a high temperature and a case where conversion and consumption of the aliphatic dihydroxyl compound during the reaction becomes a problem.

In the present invention, the aromatic dicarboxylic acid compound used in the second reaction may be put into the reactor after the first reaction is ended, or may be put into the reactor together with the aliphatic dicarboxylic acid compound at the beginning of the reaction. In the latter case, even if all the compounds are put into the reactor at the same time, the first reaction and the second reaction are carried out in sequence by regulating a reaction temperature. It is possible to do so since the first reaction and the second reaction are carried out at different reaction temperatures. That is, when water flowing out during the esterification reaction of the aliphatic dihydroxyl compound in the reaction carried out at a temperature ranging from 170 to 190°C reaches a theoretically calculated amount, the temperature is increased to 220 to 260°C and the second reaction is carried out.

During the second reaction, when the reaction is ended, there is no more water evaporating and flowing out. Therefore, vapor does not pass through an upper part of a condenser and a temperature is decreased. In an example of the present invention, the reaction is ended at the time when a temperature at the upper part of the condenser starts to decrease to 90°C or less.

The first and second reactions can be carried out continuously or batchwise.

In the present invention, the aliphatic-aromatic polyester copolymer is obtained through the first and second reactions, and then, a molecular weight is increased through a subsequent polycondensation reaction or a chain extension reaction, thereby obtaining a biodegradable resin having desired properties.

Preferably, in the present invention, the aliphatic-aromatic polyester copolymer obtained from the first and second reactions undergoes a polycondensation reaction at a vacuum level of less than 2 torr and at a temperature ranging from 220 to 250°C for 40 to 300 minutes.

The polycondensation reaction is carried out to make a reaction between the oligomers produced through the first and second reactions or polymers which do not reach a desired molecular weight. In order to do so, a polycondensation reaction needs to be carried out with functional groups which do not react but remain at ends of the polymers or chains of the polymer, and, thus, the polycondensation reaction is carried out under vacuum at a high temperature. A process time of the polycondensation reaction can be regulated depending on an amount of a catalyst used and an input method thereof which will be described later.

Further, in the present invention, in order to connect two or more products from the polycondensation reaction of the aliphatic-aromatic polyester copolymer obtained from the first and second reactions, a chain extension reaction is carried out by adding a chain extender. As the chain extender, a poly-isocyanate compound, an aromatic amine-based compound, etc. may be used. Preferably, the chain extender may be used in an amount of 0.1 to 5 parts by weight with respect to the copolymer. Further, the present invention includes a case where a poly-isocyanate compound is used in a small amount as described in Korean Patent Application No. 10-2011-0009435.

As the poly-isocyanate compound, one or more selected from the group consisting of 2,4-toluene diisocyanate, 2,6-toluene diisocyanate, diphenyl methane diisocyanate, xylylene diisocyanate, 1,5-naphthylene diisocyanate, hexamethylene diisocyanate, and triphenylmethane triisocyanate may be used. As the aromatic amine-based compound, particularly DETDA80 from Lonza Ltd. composed of 3,5-diethyl-2,4-diaminotoluene and 3,5-diethyl-2,6-diaminotoluene mixed in a ratio of 20: 80 parts by weight may be used.

In the first and second reactions, the polycondensation reaction, and the chain extension reaction of the present invention, a compound (branching agent) having a functional group of trivalence or more is selectively added to make a branching reaction, and, thus, a molecular weight is increased and a polymer having a branching structure can be produced at the same time.

As the branching agent, one or more polyfunctional compounds selected from the group consisting of trifunctional or more functional polyalcohol, trifunctional or more functional poly carboxylic acid or anhydrides thereof, and trifunctional or more functional hydroxyl carboxylic acid. Otherwise, a branching agent solution as described in Korean Patent Application No. 10-2011-0010269 may be used in an amount of 0.1 to 3 g with respect to 1 mol of the aliphatic and aromatic dicarboxylic acid compounds.

In the present invention, whether or not the branching agent is used or an amount of the branching agent used is a factor which has a great effect on the biodegradable resin's properties indicated by the melting flow index. Therefore, in the present invention, as a means for regulating the properties of the resin, whether or not the branching agent is used or an amount of the branching agent used is determined in each reaction for producing the resin.

Further, in order to improve reaction efficiency by promoting the reactions and inducing stable reactions, a catalyst or a thermal stabilizer may be used.

As the catalyst, preferably, an organic titanium catalyst such as tetra-n-butyl titanate (Ti(OC₄H₉)₄) or Vertec^{®} VEXP 0641 (titanium type catalyst, Johnson Matthey) may be used. Preferably, the catalyst may be used in an amount of 0.1 to 1.5 g with respect to 1 mol of the aliphatic and aromatic dicarboxylic acid compounds.

The thermal stabilizer may include a phosphorus compound such as triphenyl phosphate or trimethyl phosphate. The phosphorous compound prevents pyrolysis while a molecular weight increase reaction is carried out at a high temperature, and thus the reaction can be maintained stable.

Hereinafter, the present invention will be described in detail with reference to Examples. However, Examples are provided only for easy understanding of the present invention, and the present invention is not limited thereto.

### Example 1

1.3 mol of 1,4-butanediol (SK), 0.52 mol of adipic acid (Rhodia), 0.4 g of tetra-n-butyl titanate, 0.1 g of triphenyl phosphate, and 1.3 g of a branching agent solution as described in Korean Patent Application No. 10-2011-0010269 were mixed in a 500 ml 3-neck reactor, and then a temperature was increased. At 180°C, a first esterification reaction was carried out. The reaction was carried out until water (0.52 × 2 mol) in an amount of 18.72 ml as a theoretical outflow flowed out, and then the reaction was ended.

Then, 0.48 mol of terephthalic acid (Samsung Petrochemical Co., Ltd.) was additionally put into the reactor, and then the temperature was increased. At 240°C, a second reaction was carried out. The reaction was ended at the time when a temperature at an upper part of a reactor condenser started to decrease to 90°C or less.

Then, reaction products obtained from the first and second reactions underwent a polycondensation reaction at 230°C and at a vacuum level of less than 1 torr for 135 minutes so as to obtain a biodegradable resin.

### Example 2

First and second reactions were carried out in the same manner as Example 1 except that after 1,4-butanediol, adipic acid, terephthalic acid, 0.3 g of tetra-n-butyl titanate, 0.1 g of triphenyl phosphate, and 1.3 g of a branching agent solution as described in Korean Patent Application No. 10-2011-0010269 were put into a reactor at the same time, the first and second esterification reactions were carried out in sequence. That is, after a temperature in the reactor was increased to 180°C, the first esterification reaction was carried out until water in an amount of 18.72 ml as a theoretical outflow flowed out, and then after the temperature in the reactor was increased again to 240°C, the second reaction was carried out. After the second reaction was ended, 0.3 g of tetra-n-butyl titanate was additionally put into the reactor, and a polycondensation reaction was carried out at 230°C and at a vacuum level of less than 1 torr for 90 minutes so as to obtain a biodegradable resin.

### Example 3

The polymer produced in Example 1 was put into a high-temperature vacuum dryer and vacuum-dried at 20 Torr or less and at 80°C for 4 hours or more. 40 mg of diisocyanate (hexamethylene diisocyanate) as a chain extender was added to 200 g of the resultant polymer, and 40 mg of an antioxidant (Tetrakis[methylene(3,5-di-t-butyl-4-hydroxyhydrocinnamate)]methane, AO-60) and 40 mg of wax (ethylene bis-stearamide, EBS) were further added thereto and then mixed. Then, at 170°C, the mixture was reacted while being extruded. A final biodegradable resin was obtained.

### Example 4

A final biodegradable resin was obtained in the same manner as Example 3 except that the polymer produced in Example 2 was used instead of the polymer produced in Example 1 and used in Example 3.

### Example 5

A biodegradable resin was obtained in the same manner as Example 2 except that the branching agent solution in Example 2 was not used.

### Comparative Example 1

1.3 mol of 1,4-butanediol and 0.48 mol of terephthalic acid were put into a reactor, and then a temperature was increased to 180°C and a reaction was carried out. However, reaction water did not flow out. Therefore, it was confirmed that a reaction between the two monomers was not induced at the above-described temperature.

### Comparative Example 2

1.3 mol of 1,4-butanediol, 0.52 mol of adipic acid, and 0.48 mol terephthalic acid were put into a reactor, and then a temperature was increased to 240°C and a reaction was carried out for 240 minutes. The reaction was carried out and reaction water flowed out.

### Experimental Example

### (Property evaluation on biodegradable resin)

Properties of the biodegradable resins obtained from Examples 1 to 4 were evaluated as follows. For comparison in properties, as commercially available polybutylene adipate-co-terephthalate (PBAT) products, a product (S-Enpol) produced using the existing dimethyl terephthalate and Ecoflex®C1200 from BASF were used as control groups.

A melting flow index (MFI) and a molecular weight of each resin were measured.

The MFI was obtained by measuring an amount of a resin flowing for ten minutes under a load of 2160 g at 190°C with a MELTINGINDEXER (GOTPFERT, MI-3). Further, the molecular weight was obtained by preparing a chloroform solution of 0.1 wt.% with respect to a resin and then taking a measurement at 35°C at a flow rate of 1 ml/min with a Gel Permeation Chromatography (GPC) (Agilent 1200 Infinity Series). Results of the respective measurements were as shown in Table 1.

Further, a thermal analysis on each resin was conducted with a Differential Scanning Calorimetry (DSC). From the thermal analysis, a glass transition temperature (Tg), a melting point (Tₘ), and a crystallization temperature (T_{c}) of a resin were obtained. Results thereof were as shown in Table 1.

**[Table 1]**

| | Number-average molecular weight | Weight-average molecular weight | PDI | MFI | T_{g} (°C) | Tₘ (°C) | T_{c} (°C) |
|---|---|---|---|---|---|---|---|
| Example 1 | 65,500 | 157,000 | 2.40 | 6.6 | -30 | 124.2 | 65.3 |
| Example 2 | 57,000 | 148,000 | 2.60 | 7.2 | -31 | 124.5 | 68.9 |
| Example 3 | 66,000 | 159,000 | 2.41 | 5.8 | -30 | 124.3 | 64.8 |
| Example 4 | 61,000 | 153,000 | 2.51 | 6.6 | -30 | 124.5 | 66.2 |
| Example 5 | 73,000 | 155,000 | 2.12 | 3.2 | -34 | 124.5 | 57.8 |
| PBAT (by IMT) | 48,000 | 147,000 | 3.06 | 7.2 | -30 | 123.9 | 81.7 |
| Ecoflex^{®} | 66,000 | 152,000 | 2.30 | 6.7 | -31 | 124.7 | 40.2 |

As shown in Table 1 above, it was confirmed that the biodegradable resins produced according to the present invention were equivalent to the conventional products in terms of mechanical properties and thermal characteristics.

Particularly, as compared with the resin synthesized in the same conditions using a branching agent in Example 2, the resin synthesized without using a branching agent in Example 5 had a greatly decreased melting flow index and a low crystallization temperature (T_{c}). That is, it was improved in terms of mechanical properties. From this, it can be seen that properties of a resin can be regulated depending on whether or not a branching agent is used or an amount of the branching agent in the present invention.

Then, the resin from Example 1 and the Ecoflex^{®} resin were compared and analyzed using a chromameter (SpectraMagic NX, Konica Minolta). A result thereof was as shown in Table 2.

**[Table 2]**

| | L | a | b |
|---|---|---|---|
| Example 1 | 85.35 | -2.05 | 4.56 |
| Ecoflex^{®} | 84.7 | -1.78 | 4.12 |

In the film color data, as "L" value increases, the color appears bright, and as "a" and "b" values are closer to 0, the color appears excellent. As compared with the products of the control groups, the resins produced according to the present invention were not much different in color.

### (Analysis on reaction outflow water)

Outflow water as results of the reactions in Examples 1, 2, and Comparative Example 2 was analyzed by Gas Chromatography (GC). As a result of the analysis, from the reaction outflow water in Comparative Example 2, tetrahydrofuran (THF) of about 20% was detected. Meanwhile, from the reaction outflow water in Examples 1 and 2, tetrahydrofuran in a small amount of about 5 to 7% was detected.

Therefore, it can be seen that according to the present invention, it is possible to induce an efficient reaction by minimizing consumption of an aliphatic dihydroxyl compound and involving most of the aliphatic dihydroxyl compound in the reaction.

## Claims

1. A production method for a biodegradable polyester copolymer resin, the production method comprising:
causing a hydroxyl group of an aliphatic dihydroxyl compound to undergo a first reaction with a carboxyl group of an aliphatic dicarboxylic acid compound; and
causing the residual hydroxyl group of the aliphatic dihydroxyl compound to undergo a second reaction with a carboxyl group of an aromatic dicarboxylic acid compound.

2. The production method of claim 1, wherein the aliphatic dihydroxyl compound is 1,4-butanediol (BDO).

3. The production method of claim 1, wherein the aliphatic dicarboxylic acid compound is a compound expressed by Chemical Formula 1, anhydrides, or derivatives thereof:
[Chemical Formula 1] HOOC-(CH₂)ₙ-COOH
wherein in Chemical Formula 1, n is 2 to 12.

4. The production method of claim 1, wherein the aromatic dicarboxylic acid compound is one or more selected from the group consisting of phthalic acid (PA), phthalic anhydride, isophthalic acid (IPA), terephthalic acid (TPA), and naphthalene-2,6-dicarboxylic acid.

5. The production method of claim 1, wherein the aliphatic dihydroxyl compound is used in an amount of 1 to 1.5 equivalent weight with respect to the aliphatic and aromatic dicarboxylic acid compounds.

6. The production method of claim 1, wherein the first reaction is carried out first at a temperature ranging from 170 to 190°C and the second reaction is carried out in sequence at a temperature ranging from 230 to 260°C.

7. The production method of claim 1, wherein the aliphatic dihydroxyl compound, the aliphatic dicarboxylic acid compound, and the aromatic dicarboxylic acid compound are put into a reactor at the same time and a reaction temperature is set to 170 to 190°C to carry out the first reaction, and then the reaction temperature is set to 230 to 260°C to carry out the second reaction.

8. The production method of claim 1, wherein the aliphatic dihydroxyl compound and the aliphatic dicarboxylic acid compound are put into a reactor and a reaction temperature is set to 170 to 190°C to carry out the first reaction, and then the aromatic dicarboxylic acid compound is put into the reactor and the reaction temperature is set to 230 to 260°C to carry out the second reaction.

9. The production method of claim 1, the production method further comprising causing an aliphatic-aromatic polyester copolymer obtained from the first and second reactions to undergo a polycondensation reaction at 220 to 250°C and at a vacuum level of less than 2 torr for 40 to 300 minutes.

10. The production method of claim 9, the production method further comprising making a reaction by adding a chain extender after the polycondensation reaction.

11. The production method of any of claim 1, 9 or 10, wherein in the reaction, a branching agent, a catalyst, or a thermal stabilizer is used.
